# EUROPÄISCHE PATENTSCHRIFT

(11) **EP 1 396 705 B1**
(45) Veröffentlichungstag und Bekanntmachung des Hinweises auf die Patenterteilung: **21.12.2016**
(21) Anmeldenummer: 03018632.4
(22) Anmeldetag: 20.08.2003
(51) Int. Cl.: G01F 1/00, G01F 1/684

(54) **Flussdetektor mit Durchführungen und Verfahren zu dessen Herstellung**
Flow detector with through-holes and and process for making the same
Détecteur d'écoulement avec des passages et procédé pour sa fabrication

(30) Priorität: 27.08.2002 CH 14652002
(43) Veröffentlichungstag der Anmeldung: 10.03.2004
(73) Patentinhaber: Sensirion Holding AG, 8712 Stäfa (CH)
(72) Erfinder: Mayer, Felix, 8057 Zürich (CH); Lechner, Moritz, 8057 Zürich (CH); Hornung, Mark, 8052 Zürich (CH); Kubasch, Jens, 8052 Zürich (CH)
(74) Vertreter: Sutter, Kurt

(56) Entgegenhaltungen:
- EP-A- 0 974 817
- EP-A- 1 035 406
- EP-A- 1 182 432
- US-A- 5 396 795
- US-A- 6 032 527
- US-B1- 6 176 131
- Appo J. van der Wiel: "Flow Measurement Concepts Applied to Silicon Sensors", 1994, Institute of Microtechnology, Université de Neuchâtel, 1994, Institute of Microtechnology, University of Neuchâtel, Rue A.L. Breguet 2, CH 2000, Neuchâtel, Switzerland pages 4-4,
- Prospekte der Firma electrovac, Transistorhalter, Gehäuse für Hybridschaltungen und LWL-Komponenten, Version 1.0/SCR, 10.01.2002 und Konstruktionszeichnung mit verschiedener Datierung (1992 bis 1998)
- JIMENEZ V ET AL: "Simulation of flow sensors for home appliances", MICROELECTRONICS JOURNAL, MACKINTOSH PUBLICATIONS LTD. LUTON, GB, vol. 29, no. 4-5, 5 April 1998 (1998-04-05), pages 283-289, XP004110785, ISSN: 0026-2692, DOI: 10.1016/S0026-2692(97)00068-2

## Beschreibung

Die Erfindung betrifft einen Flussdetektor und ein Verfahren zu dessen Herstellung gemäss Oberbegriff der unabhängigen Ansprüche.

Aus US 2002/0043710 A1 ist ein Flussdetektor bekannt, der ein zweiteiliges Gehäuse und einen im Gehäuse angeordneten Halbleiterchip mit integriertem Flusssensor besitzt. Der Halbleiterchip ist in einer Kavität des Gehäuses angeordnet. Zur Verbindung des Halbleiterchips mit der Aussenwelt wird ein dünner, flexibler Leiterbahnträger zwischen den Gehäuseteilen nach aussen geführt, was allerdings eine vollständige Abdichtung der Kavität erschwert und zu Lecken führen kann, die bei gewissen Anwendungen stören.

Es stellt sich deshalb die Aufgabe einen Flussdetektor der eingangs genannten Art bereitzustellen, der einfach und gut abgedichtet werden kann.

Diese Aufgabe wird vom Gegenstand gemäss den unabhängigen Ansprüchen gelöst.

Erfindungsgemäss ist zur elektrischen Verbindung des Chips mit der Aussenwelt also mindestens eine Verbindungsöffnung im Gehäuse vorgesehen, die von der Kavität nach aussen läuft. In der Verbindungsöffnung sind eine aushärtende Füllmasse und elektrische Durchführungen angeordnet. Dabei gewährleistet die Füllmasse eine für das zu messende Fluid dichtende Verbindung zwischen Gehäuse und Durchführungen, so dass die Kavität im Bereich der Durchführungen dicht ist.

Zur Herstellung werden die Durchführungen und die Füllmasse in die Verbindungsöffnung(en) eingebracht und die Füllmasse wird ausgehärtet. Dies vereinfacht die Herstellung des Bauteils.

Der erfindungsgemässe Flussdetektor kann zur Messung der Flussgeschwindigkeit oder des Massenflusses verschiedenster Fluide eingesetzt werden. Dank seiner guten Dichtigkeit ist er besonders geeignet für Messungen an Helium oder Wasserstoff oder zu Messungen an hoch giftigen, stark korrosiven oder stark toxischen Fluiden.

Weitere bevorzugte Ausführungen ergeben sich aus den abhängigen Ansprüchen sowie aus der nun folgenden Beschreibung anhand der Figuren. Dabei zeigen:
Fig. 1 eine Ansicht des einen Gehäuseteils von der Innenseite her,
Fig. 2 eine Ansicht des anderen Gehäuseteils von der Innenseite her und
Fig. 3 einen Schnitt durch den Flussdetektor entlang Linie III-III von Fig. 1 und 2.

Der in den Figuren dargestellte Flussdetektor besitzt einen ersten Gehäuseteil 1, einen zweiten Gehäuseteil 2 und einen im wesentlichen zwischen den Gehäuseteilen 1, 2 angeordneten Halbleiterchip 3.

In einer Oberfläche des ersten Gehäuseteils 1 ist eine gerade Nut 5 angeordnet, die, zusammen mit dem angrenzenden zweiten Gehäuseteil 2, einen Messkanal bildet. Durch den ersten Gehäuseteil 1 erstrecken sich zwei Anschlussleitungen 6, ausgestaltet als Bohrungen bzw. Löcher, die die Enden des Messkanals mit der Aussenwelt verbinden.

Weiter ist sind im ersten und zweiten Gehäuseteil Vertiefungen 7 bzw. 8 vorgesehen. Die Nut 5 und die Vertiefungen 7 und 8 bilden im Innern des Gehäuses eine Kavität. Der durch die Nut 5 gebildete Teil der Kavität dient als Messkanal für das zu messende Medium, bei welchem es sich um ein Gas oder eine Flüssigkeit handeln kann.

Ein möglicher Aufbau des Halbleiterchips 3 wird in US 2002/0043710 A1 dargestellt. Er besitzt z.B. eine Heizung, die zwischen zwei Temperatursensoren angeordnet ist, und gegebenenfalls noch weitere Komponenten zur Messungssteuerung oder -auswertung. Wenn das zu messende Medium durch den Messkanal fliesst, wird die von der Heizung stammende Energie ungleich auf die beiden Temperatursensoren verteilt, was einen Rückschluss über die Flussgeschwindigkeit bzw. den Massenfluss zulässt.

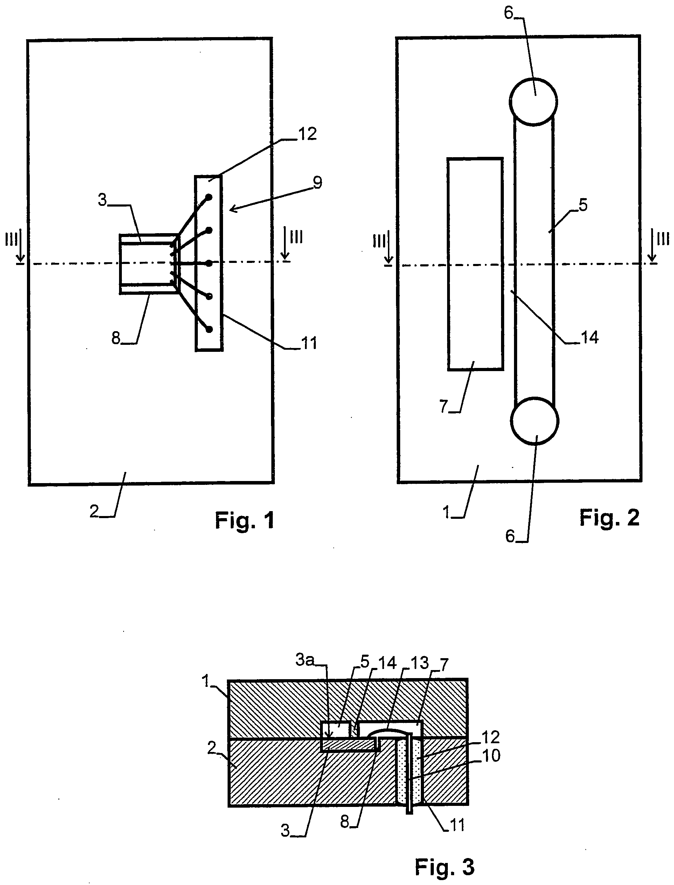

Wie insbesondere aus Fig. 3 ersichtlich, liegt der Halbleiterchip 3 in der vorliegenden Ausführung in der Vertiefung 8 des zweiten Gehäusteils 2. Er ist so angeordnet, dass der die Temperatursensoren und die Heizung tragende Oberflächenbereich 3a bündig zur Wand des Messkanals zu liegen kommt.

Der zwischen Nut 5 und Vertiefung 7 des ersten Gehäuseteils verlaufende Steg 14 berührt die Bauteilseite des Halbleiterchips 3 und unterteilt diese in zwei Teile. Der erste Teil entspricht im wesentlichen dem erwähnten Oberflächenbereich 3a, während der zweite Teil allfällige elektronische Komponenten und Anschlusspads des Halbleiterchips 3 enthält, die dank dem Steg 14 vom Messkanal räumlich getrennt sind.

Zur elektrischen Verbindung des Halbleiterchips 3 mit der Aussenwelt ist im zweiten Gehäuseteil 2, d.h. im gleichen Gehäuseteil, in dem auch der Halbleiterchip 3 angeordnet ist, eine Verbindungsöffnung 11 vorgesehen, die sich von der Kavität im Gehäuseinnern nach aussen erstreckt. In der Verbindungsöffnung 11 sind Metalldrähte oder Metallstifte angeordnet, die als elektrische Durchführungen 10 dienen. Der Bereich zwischen den Durchführungen 10 und dem Rand der Verbindungsöffnung 11 ist mit einer ausgehärteten Abdichtmasse 12 gefüllt. Die Abdichtmasse 12 verbindet die Durchführungen 11 mit dem Gehäuseteil 2 und dichtet die Kavität gegen aussen ab.

Zur elektrischen Verbindung des Halbleiterchips 3 mit den Durchführungen 10 sind Verbindungsdrähte 13 vorgesehen, die in der Vertiefung 7 des ersten Gehäuseteils 1 verlaufen.

Zur Abdichtung der beiden Gehäuseteile 1, 2 gegeneinander kann eine Dichtung vorgesehen sein, wie sie in US 2002/0043710 A1 beschrieben wird. Die beiden Gehäuseteile 1, 2 können auch miteinander verklebt oder verschweisst sein.

In der vorliegenden Ausführung ist genau eine Verbindungsöffnung 11 vorgesehen, in der alle Durchführungen 10 angeordnet sind. Es ist auch denkbar, für jede Durchführung 10 eine separate Verbindungsöffnung 11 vorzusehen.

In der Ausführung nach Fig. 1 - 3 ist der Halbleiterchip 3 in einer Vertiefung 3 des zweiten Gehäuseteils angeordnet.

Die Füllmasse 12 ist vorzugsweise aus Glas. Sie kann jedoch auch, je nach Anwendungszweck, aus einem anderen aushärtbaren Material bestehen, z.B. aus Kleber und/oder Epoxiharz. Bei Verwendung eines Metallgehäuses ist eine elektrisch nicht leitende Füllmasse zu verwenden. Je nach Anwendung können die Gehäuseteile z.B. aus Metall, Kunststoff oder Keramik sein.

Bei der Herstellung werden die Durchführungen 10 in die Verbindungsöffnung 11 gehalten und von der Abdichtmasse umgossen. Sodann wird die Abdichtmasse ausgehärtet. Jetzt kann der Halbleiterchip 3 eingesetzt und mit den Durchführungen 10 elektrisch verbunden werden. Dann werden die beiden Gehäuseteile miteinander verbunden.

Um die Drähte 13 zu schützen, kann nach dem Zusammenfügen der Gehäuseteile die Vertiefung 7 und somit ein Teil der Kavität im Innern des Gehäuses ebenfalls mit einer aushärtenden Füllmasse gefüllt werden.

## Patentansprüche

1. Flussdetektor umfassend ein Gehäuse mit mindestens zwei Gehäuseteilen, eine im Gehäuse angeordnete Kavität (5, 7, 8) mit einem Messkanal (5) für ein zu messendes Medium, einen in der Kavität angeordneten Halbleiterchip (3) mit integriertem Flusssensor, mindestens eine im Gehäuse von der Kavität durch eine Gehäusewand hindurch nach aussen verlaufende Verbindungsöffnung (11), **dadurch gekennzeichnet,**
**dass** in der mindestens einen Verbindungsöffnung (11) eine ausgehärtete Füllmasse (12) und mindestens eine elektrische Durchführung (10) angeordnet sind, wobei die Füllmasse (12) eine abdichtende mechanische Verbindung zwischen dem Gehäuse und den als Metallstiften oder Metalldrähten ausgebildeten elektrischen Durchführungen bildet,
**dass** der Halbleiterchip (3) vertieft im gleichen Gehäuseteil (2) angeordnet ist, durch welchen sich auch die Verbindungsöffnung bzw. Verbindungsöffnungen (11) erstreckt bzw. erstrecken,
**dass** in einem anderen der Gehäuseteile (1) eine Vertiefung (7) angeordnet ist, in welcher Verbindungsdrähte (13) zwischen dem Halbleiterchip und den Durchführungen verlaufen.

2. Flussdetektor nach Anspruch 1, wobei die Füllmasse Glas oder ein Epoxiharz ist.

3. Flussdetektor nach einem der vorangehenden Ansprüche, wobei das Gehäuse aus Metall, Keramik oder Kunststoff ist.

4. Flussdetektor nach einem der vorhergehenden Ansprüche, wobei die Verbindungsöffnung bzw. Verbindungsöffnungen (11) in genau einem der Gehäuseteile (1, 2) angeordnet ist bzw. sind.

5. Flussdetektor nach einem der vorhergehenden Ansprüche, wobei die Gehäuseteile (1, 2) miteinander verschweisst oder verklebt sind.

6. Flussdetektor nach einem der vorhergehenden Ansprüche, wobei mehrere Durchführungen (10) in einer gemeinsamen Verbindungsöffnung (11) angeordnet sind.

7. Verfahren zum Herstellen des Flussdetektors nach einem der vorangehenden Ansprüche, **dadurch gekennzeichnet, dass** die Durchführungen (10) und die Füllmasse (12) in die Verbindungsöffnung bzw. Verbindungsöffnungen (11) eingebracht werden und sodann die Füllmasse (12) ausgehärtet wird.

## Claims

1. Flow detector comprising a housing with at least two housing parts, a cavity (5, 7, 8) arranged inside the casing, with a measurement channel (5) for a medium to be measured, a semiconductor chip (3) with integrated flow sensor arranged inside the cavity, at least one connecting opening (11) extending inside the housing from the cavity through a housing wall to the exterior, **characterized**
**in that** a hardened filling mass (12) and at least an electrical feedthrough (10) are arranged in the at least one connecting opening (11), wherein the filling mass (12) forms a sealing mechanic connection between the housing and the electrical feedthroughs formed as metal pins or metal wires,
**in that** the semiconductor chip (3) is arranged recessed is the same housing part (2) through which also the connecting opening or the connecting openings, respectively, extends or extend, respectively,
**in that** a recess (7) is arranged in another one of the housing parts (1), inside which connecting wires (13) extend between the semiconductor chip and the feedthroughs.

2. Flow detector according to claim 1,
wherein the filling mass is glass or an epoxy resin.

3. Flow detector according to one of the preceding claims, wherein the housing is made of metal, ceramic or plastic.

4. Flow detector according to one of the preceding claims, wherein the connecting opening or the connecting openings (11), respectively, is or are arranged in precisely one of the housing parts (1, 2).

5. Flow detector according to one of the preceding claims, wherein the housing parts (1, 2) are welded or glued to one another.

6. Flow detector according to one of the preceding claims, wherein multiple feedthroughs (10) are arranged in a common connecting opening (11).

7. Method for manufacturing the flow detector according to one of the preceding claims, **characterized in that** the feedthroughs (10) and the filling mass (12) are introduced into the connecting opening or connecting openings, respectively, and thereafter the filling mass (12) is hardened.

## Revendications

1. Détecteur de flux comprenant une carcasse avec au moins deux parties de carcasse, une cavité (5, 7, 8) arrangée dans la carcasse, avec un canal de mesure (5) pour un médium à mesurer, une puce semi-conductrice (3) avec un capteur de flux arrangé à l'intérieur de la cavité, au moins une ouverture de connexion (11) qui s'étend à l'intérieur de la carcasse à partir de la cavité à travers une paroi de la carcasse vers l'extérieur, **caractérisé**
**en ce qu'**une masse de remplissage (12) durcie et au moins une traversée électrique (10) sont arrangées dans l'au moins une ouverture de connexion (11), la masse de remplissage (12) formant une connexion mécanique étanche entre la carcasse et les traversées électriques en forme de tige de métal ou câbles de métal,
**en ce que** la puce semi-conductrice (3) est arrangée de manière encastrée dans la même partie de carcasse (2) à travers laquelle l'ouverture de connexion ou bien les ouvertures de connexion s'étend ou bien s'étendent aussi,
**en ce qu'**un logement (7) est arrangé dans une des autres parties de carcasse (1), à l'intérieur de laquelle des câbles de connexion (13) s'étendent entre la puce semi-conductrice et les traversées.

2. Détecteur de flux selon la revendication 1, la masse de remplissage étant du verre ou de la résine époxy.

3. Détecteur de flux selon l'une des revendications précédentes, la carcasse étant en métal, céramique ou plastique.

4. Détecteur de flux selon l'une des revendications précédentes, l'ouverture de connexion ou bien les ouvertures de connexion (11) étant arrangée ou bien arrangées dans exactement une partie de carcasse (1, 2).

5. Détecteur de flux selon l'une des revendications précédentes, les parties de carcasse (1, 2) étant soudées ou colées l'une avec l'autre.

6. Détecteur de flux selon l'une des revendications précédentes, des multiples traversées (10) étant arrangées dans une ouverture de connexion (11) commune.

7. Procédé pour la fabrication du détecteur de flux selon l'une des revendications précédentes, **caractérisé en ce que** les traversées (10) et la masse de remplissage (12) sont introduites dans l'ouverture de connexion ou bien les ouvertures de connexion et ensuite la masse de remplissage (12) est durcie.
